(19) Europäisches Patentamt
European Patent Office
Office européen des brevets

(11) EP 3 196 433 B1

(12) **EUROPÄISCHE PATENTSCHRIFT**

(45) Veröffentlichungstag und Bekanntmachung des Hinweises auf die Patenterteilung:
**19.12.2018 Patentblatt 2018/51**

(21) Anmeldenummer: **17150957.3**

(22) Anmeldetag: **11.01.2017**

(51) Int Cl.:
*F01N 3/08* (2006.01)     *F01N 11/00* (2006.01)

(54) **VERFAHREN ZUR ÜBERWACHUNG EINER ABGASNACHBEHANDLUNGSANLAGE, INSBESONDERE EINES NOX-SPEICHER-KATALYSATORS SOWIE STEUERUNGSEINRICHTUNG FÜR EINE ABGASNACHBEHANDLUNGSANLAGE UND FAHRZEUG**

METHOD OF MONITORING AN EXHAUST GAS AFTERTREATMENT SYSTEM, ESPECIALLY AN NOX STORAGE CATALYST, AND CONTROL UNIT FOR AN EXHAUST GAS AFTERTREATMENT SYSTEM AND MOTOR VEHICLE

PROCÉDÉ DE SURVEILLANCE D'UN DISPOSITIF DE POST-TRAITEMENT DES GAZ D'ÉCHAPPEMENT, EN PARTICULIER UN CATALYSEUR-ACCUMULATEUR DE NOX ET DISPOSITIF DE COMMANDE POUR UN DISPOSITIF DE POST-TRAITEMENT DES GAZ D'ÉCHAPPEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.01.2016 DE 102016200941**

(43) Veröffentlichungstag der Anmeldung:
**26.07.2017 Patentblatt 2017/30**

(73) Patentinhaber: **Ford Global Technologies, LLC Dearborn, MI 48126 (US)**

(72) Erfinder:
• **De Smet, Frederik
3600 Genk (BE)**
• **Ford, Kim
Basildon, Essex, SS16 6LX (GB)**
• **Davies, Marcus Timothy
Rochester, ME2 4NE (GB)**

(74) Vertreter: **Dörfler, Thomas
Ford-Werke GmbH
Abt. NH/364
Henry-Ford-Strasse 1
50735 Köln (DE)**

(56) Entgegenhaltungen:
DE-A1- 19 926 149     DE-A1-102012 218 728
DE-B4- 10 302 700

**Beschreibung**

Die Erfindung betrifft ein Verfahren zur Überwachung einer Abgasnachbehandlungsanlage, insbesondere eines NOx-Speicher-Katalysators, während des Betriebs eines Fahrzeugs.

Verbrennungsmotoren erzeugen beim Betrieb häufig erhebliche Mengen von Stickoxiden ($NO_x$). Insbesondere bei in Kraftfahrzeugen eingesetzten Diesel- und OttoMotoren liegen die Stickoxid-Mengen im Rohabgas in der Regel über den zulässigen Grenzwerten, so dass eine Abgasnachbehandlung zur Verringerung der $NO_x$-Emissionen notwendig ist. Bei vielen Motoren erfolgt die Reduktion der Stickoxide durch die im Abgas enthaltenen nicht-oxidierten Bestandteile, nämlich durch Kohlenmonoxid (CO) und unverbrannte Kohlenwasserstoffe (HC), mit Hilfe eines Dreiwegekatalysators. Insbesondere bei Diesel- und Otto-Magermotoren steht dieses Verfahren jedoch nicht zur Verfügung, da durch den hohen Sauerstoffanteil im Abgas die Reduzierung von $NO_x$ nicht bzw. kaum erfolgt. Vor allem bei mager betriebenen Ottomotoren, aber auch bei Dieselmotoren wird daher gemäß einem verbreiteten Verfahren ein NOx-Speicher-Katalysators (auch "LNT" von englisch "Lean NOx Trap") eingesetzt, der die im Abgas des Verbrennungsmotors enthaltenen Stickoxide anlagert. Wenn das Aufnahmevermögen des NOx-Speicher-Katalysators erschöpft ist, wird dieser üblicherweise durch "fetten" Betrieb (Betrieb mit Kraftstoffüberschuss) des Verbrennungsmotors regeneriert.

Je nach Förderregion enthält Erdöl verschieden hohe Anteile an Schwefel. In den handelsüblichen aus Erdöl hergestellten Kraftstoffen finden sich dementsprechend Restgehalte an Schwefel. Zwar sind die zulässigen Schwefelgehalte für Tankstellenkraftstoff im Rahmen gesetzgeberischer Maßnahmen zumindest in Europa und Nordamerika über die Jahre stark gesenkt worden. Trotzdem werden dem Verbrennungsmotor, insbesondere Dieselmotoren, weiterhin Restmengen von Schwefel mit dem Kraftsoff zugeführt. Nach der Verbrennung findet sich dieser Schwefel im Abgas.

Die Funktionsfähigkeit des NOx-Speicherkatalysators nimmt mit zunehmender Betriebsdauer ab, was unter anderem auf eine Kontamination des NOx-Speicherkatalysators mit dem im Abgas enthaltenen Schwefel zurückzuführen ist, sowie auf thermische Alterung in Folge hoher Temperaturen. Schwefel wird im NOx-Speicherkatalysator als Schwefeloxid SOx angelagert. Es kann also im hier diskutierten Zusammenhang bedeutungsgleich von Schwefelkontamination oder einer SOx-Kontamination des NOx-Speicherkatalysators gesprochen werden. Die Kontamination mit Schwefel wird üblicherweise durch abwechselnden Betrieb mit fettem und magerem Luft-Kraftstoff-Verhältnis $\lambda$ bei hohen Abgastemperaturen aus dem NOx-Speicherkatalysator entfernt. Dies wird auch als ein DeSOx-Vorgang bezeichnet. Die hohen Abgastemperaturen während eines solchen DeSOx-Vorgangs führen allerdings zu thermischer Alterung des NOx-Speicherkatalysators. Diese thermische Alterung ist irreversibel. Die Alterung des NOx-Speicherkatalysators setzt sich also zusammen aus irreversibler thermischer Alterung und scheinbarer Alterung durch Schwefel-Kontamination.

Ein weiterer Nachteil von DeSOx-Vorgängen liegt darin, dass ein Betrieb mit hohen Abgastemperaturen und fettem Luft-Kraftstoff-Verhältnis den Kraftstoffverbrauch des Fahrzeugs erhöht. Es ist daher sinnvoll, die Anzahl der DeSOx-Vorgänge auf ein Mindestmaß zu begrenzen, sowohl um den Kraftstoffverbrauch niedrig zu halten,a ls auch die Lebensdauer des NOx-Speicherkatalysators zu erhöhen. Dazu ist es notwendig, die Kontamination des NOx-Speicherkatalysators mit Schwefel möglichst genau zu kennen.

Alterung von NOx-Speicherkatalysatoren drückt sich in verschiedenen Effekten aus. Zum einen reduziert sich das absolute NOx-Speichervermögen eines NOx-Speicherkatalysators. Zum anderen erhöht sich der "NOx-Schlupf" beim Durchströmen des NOx-Speicherkatalysators. Der NOx-Schlupf ist der Anteil des im Abgas enthaltenen NOx, der nicht durch den NOx-Speicherkatalysator adsorbiert wird. Insbesondere der NOx-Schlupf trotz nicht erschöpfter Speicherkapazität des NOx-Speicherkatalysators, erhöht sich mit zunehmender Alterung. Der Gesetzgeber verlangt eine generelle Überwachung der Funktionsfähigkeit des NOx-Speicherkatalysators, um einen nicht regelkonformen Schadstoffausstoß während des Fahrzeugbetriebs zu vermeiden.

Eine Methode zur Diagnose von NOx-Speicherkatalysatoren basiert auf dem Vergleich der Luft-Kraftstoff-Verhältnis-Signale $\lambda$ im Abgas stromaufwärts und stromabwärts des NOx-Speicherkatalysators während der Regeneration des NOx-Speicherkatalysators. Solche Luft-Kraftstoff-Verhältnis-Signale können beispielsweise mittels handelsüblicher Lambdasonden ermittelt werden.

Um eine Regeneration des NOx-Speicherkatalysators einzuleiten, wird der Verbrennungsmotor auf den Betriebsmodus mit $\lambda<1$ umgeschaltet. Eine stromaufwärts des NOx-Speicherkatalysators angeordnete Lambda-Sonde detektiert dies im Rahmen der Strömungsgeschwindigkeit des Abgases von Verbrennungsmotor zu Messstelle und der eigenen Dynamik ohne Zeitverzug. Eine Lambda-Sonde stromabwärts des NOx-Speicherkatalysators nimmt die "Anfettung" des Luft-Kraftstoff-Verhältnisses $\lambda$ zu Beginn der Regeneration allerdings nicht wahr. Erst wenn das im NOx-Speicherkatalysator angelagerte NOx und Sauerstoff größtenteils umgesetzt wird, "sieht" eine stromabwärts des NOx-Speicherkatalysators angeordnete Lambdasonde die "Anfettung".

Beispielsweise nutzt DE 10 2012 218 728 A1 den Vergleich des Luft-Kraftstoff-Verhältnis-Signale stromauf- und stromabwärts des NOx-Speicherkatalysators zur Beurteilung von dessen Alterung. In DE 10 2012 218 728 A1 werden außerdem die beiden Signale integriert und der Wert der Integrale verglichen, um eine verbesserte Aussagekraft bei geringer Anfettung des Luft-Kraftstoff-Gemisches zu erreichen. In der DE 103 02 700 B4 wird ein Verfahren offenbart, in dem der Alterungszustand eines NOx-Speicherkatalysators auf der Basis sowohl der thermischen als auch durch Schwefelbeladung bedingte Alterung ermittelt wird.

Weitere Methoden zur Diagnose von NOx-Speicherkatalysatoren beruhen auf dem Vergleich von NOx-Gehalten stromauf- und stromabwärts des NOx-Speicherkatalysators. Solche NOx-Gehalte können beispielsweise mit NOx-Sensoren ermittelt werden. Aus den NOx-Gehalten stromauf- und stromabwärts des NOx-Speicherkatalysators lässt sich ein NOx-Schlupf ermitteln. Mit zunehmender Alterung eines NOx-Speicherkatalysators erhöht sich der NOx-Schlupf.

Aufgabe der vorliegenden Erfindung ist es, ein vorteilhaftes Verfahren zur Ermittlung des Alterungszustands eines NOx-Speicher-Katalysators Verfügung zu stellen. Außerdem ist es eine Aufgabe der vorliegenden Erfindung, eine vorteilhafte Überwachungseinrichtung zur Überwachung des Alterungszustands eines NOx-Speicher-Katalysators zur Verfügung zu stellen.

Die oben gestellten Aufgaben werden durch ein Verfahren zur Ermittlung des Alterungszustands eines NOx-Speicher-Katalysators nach Anspruch 1 sowie durch eine Überwachungseinrichtung nach Anspruch 6 gelöst. Die abhängigen Ansprüche enthalten vorteilhafte Ausgestaltungen der Erfindung.

Ein erster Aspekt der Erfindung betrifft ein Verfahren zur Ermittlung des Alterungszustands eines NOx-Speicher-Katalysators eines Fahrzeuges mit einem Verbrennungsmotor offenbart. In dem Verfahren werden ein durch thermische Alterung bedingter Anteil der Alterung des NOx-Speicher-Katalysators und ein durch Schwefelbeladung bedingter Anteil der Alterung des NOx-Speicher-Katalysators bestimmt und zu Ermittlung des Alterungszustands des NOx-Speicher-Katalysators herangezogen. Das erfindungsgemäße Verfahren zur Bestimmung der Anteile der Alterung des NOx-Speicher-Katalysators ist derart ausgebildet, dass mindestens zwei Diagnoseverfahren eingesetzt werden. Dabei reagiert mindestens eines der Diagnoseverfahren empfindlich und mindestens eines unempfindlich auf Schwefelbeladung des NOx-Speicher-Katalysators. Das unempfindlich auf Schwefelbeladung reagierende Diagnoseverfahren ist ein Verfahren, welches mindestens ein Luft-Kraftstoff-Verhältnis-Signal stromaufwärts mit mindestens einem Luft-Kraftstoff-Verhältnis-Signal stromabwärts des NOx-Speicher-Katalysators vergleicht. Insbesondere ist das unempfindlich auf Schwefelbeladung des NOx-Speicher-Katalysators reagierende Diagnoseverfahren ein Verfahren, das mindestens ein über einen Zeitraum integriertes Luft-Kraftstoff-Verhältnis-Signal stromaufwärts mit mindestens einem über denselben Zeitraum integrierten Luft-Kraftstoff-Verhältnis-Signal stromabwärts des NOx-Speicher-Katalysators vergleicht. Solche Luft-Kraftstoff-Verhältnis-Signale, auch Lambda-Signale genannt, können durch handelsübliche Lambdasonden ermittelt werden. Sie können teilweise allerdings auch aus Modellen gewonnen bzw. aus anderen Signalen errechnet werden. Zum Beispiel kann das Lambdasignal stromaufwärts des NOx-Speicher-Katalysators aus einem Luftmassenstrom und einem Kraftstoffmassenstrom in den Verbrennungsmotor ermittelt werden.

Auf Lambdasignalen basierende Diagnoseverfahren ermitteln anhand der Umsetzung von CO und HC im NOx-Speicher-Katalysator während der "fetten" Regeneration die NOx-Speicherfähigkeit. Sie haben eine geringe Empfindlichkeit gegenüber der Schwefelbeladung des NOx-Speicher-Katalysators.

Empfindlich bedeutet hier in Bezug auf das Diagnoseverfahren, dass es von der Schwefelbeladung des NOx-Speicherkatalysators wesentlich beeinflusst wird, dass also die Ergebnisse des Verfahrens stark abhängig von der Schwefelbeladung des NOx-Speicherkatalysators abhängig sind. Unempfindlich oder gering empfindlich bedeutet hier in Bezug auf das Diagnoseverfahren, dass es von der Schwefelbeladung des NOx-Speicherkatalysators nicht oder nicht wesentlich beeinflusst wird, so dass die Ergebnisse des Verfahrens nicht oder nur in geringem Maße abhängig von der Schwefelbeladung sind.

Das erfindungsgemäße Verfahren erlaubt ein separates Ermitteln des aus Schwefelbeladung resultierenden Anteils der Alterung des Nox-Speicherkatalysators und des aus thermischer Alterung resultierenden Anteils. Durch das separate Ermitteln der Alterungsanteile kann einerseits die Häufigkeit der DeSOx-Vorgänge optimiert werden und andererseits eine eindeutige Beurteilung der irreversiblen Schädigung des NOx-Speicherkatalysators erreicht werden.

Das erfindungsgemäße Verfahren erlaubt insbesondere eine Beschränkung der DeSOx-Vorgänge auf das für die Entschwefelung minimal notwendige Maß. Damit wird vorteilhaft ein geringer Kraftstoffverbrauch des erfindungsgemäßen Fahrzeugs und eine geringe thermische Alterung des in dem erfindungsgemäßen Fahrzeug verbauten NOx-Speicherkatalysators erreicht.

Außerdem ermöglicht das erfindungsgemäße Verfahren quasi jederzeit eine vorteilhaft genaue Aussage über den thermischen Alterungszustand des NOx-Speicherkatalysators. Bisherige Diagnoseverfahren ermöglichen solche Aussagen nur nach einem abgeschlossenen DeSOx-Vorgang und sind weniger genau, was Fehldiagnosen begünstigt.

Vorzugsweise ist das Diagnoseverfahren, welches empfindlich auf Schwefelbeladung des NOx-Speicher-Katalysators reagiert, ein Diagnoseverfahren, welches den NOx-Schlupf durch den NOx-Speicherkatalysator aus mindestens einem NOx-Signal stromaufwärts des NOx-Speicherkatalysator und mindestens einem NOx-Signal stromabwärts des NOx-Speicherkatalysator ermittelt. Insbesondere ist das Verfahren, welches empfindlich auf die Schwefelbeladung des NOx-Katalysators reagiert, ein Verfahren, welches den NOx-Schlupf durch den NOx-Speicherkatalysator aus mindestens einem zeitlich integrierten NOx-Signal stromaufwärts des NOx-Speicherkatalysators und mindestens einem zeitlich integrierten NOx-Signal stromabwärts des NOx-Speicherkatalysators ermittelt. Die verwendeten NOx-Signale können durch handelsübliche NOx-Sensoren ermittelt werden. Sie können teilweise allerdings auch aus Modellen gewonnen bzw. aus anderen Signalen errechnet werden. Beispielsweise kann das NOx-Signal stromaufwärts des NOx-Speicherkatalysators aus einem kennfeldbasierten Modell des Verbrennungsmotors ermittelt werden.

Verfahren, die auf der direkten Ermittlung des NOx-Schlupf basieren, haben eine große Empfindlichkeit bezüglich der Schwefelkontamination des NOx-Speicherkatalysators. Dies liegt darin begründet, dass diese Verfahren direkt die im NOx-Speicher-Katalysator angelagerte NOx-Menge bestimmen. Potentielles NOx-Speichervermögen im NOx-Speicher-Katalysator, das durch SOx blockiert ist, wird damit als nicht vorhanden detektiert.

Vorzugsweise ist das Verfahren ausgebildet, abhängig von dem durch Schwefelbeladung bedingten Anteil der Alterung des NOx-Speicher-Katalysators einen Vorgang zur Entschwefelung, wie oben beschrieben auch DeSOx-Vorgang genannt, auszulösen. So wird die NOx-Speicherfähigkeit des NOx-Speicher-Katalysators durch Entschwefelung auf das bei gegebener thermischer Alterung noch mögliche Maß zurückgesetzt, bevor unzulässige NOx-Emissionen auftreten. Gleichzeitig werden aber unnötige DeSOx-Vorgänge vermieden.

Vorzugsweise ist das erfindungsgemäße Verfahren auch ausgebildet, dass es abhängig von dem durch thermische Alterung bedingten Anteil der Alterung des NOx-Speicher-Katalysators den NOx-Speicher-Katalysator als über das zur Einhaltung der Emissionsnormen zulässig geschädigte Maß als austauschnotwendig geschädigt bewertet. Dies kann dem Fahrer durch eine Warnmeldung mitgeteilt werden, so dass das Fahrzeug einer Reparatur unterzogen werden kann, bevor unzulässige NOx-Emissionen auftreten. Gleichzeitig werden Fehldiagnosen und ein unnötiger Austausch des NOx-Speicher-Katalysators vermieden.

Ein zweiter Aspekt der Erfindung betrifft eine Überwachungseinrichtung zur Überwachung des Alterungszustands eines NOx-Speicher-Katalysators eines Fahrzeuges mit einem Verbrennungsmotor während des Betriebs des Fahrzeuges. Die Überwachungseinrichtung ist dazu ausgebildet, ein empfindlich und ein unempfindlich auf Schwefelbeladung des NOx-Speicher-Katalysators reagierendes erfindungsgemäßes Diagnoseverfahren zur Ermittlung des Alterungszustands des NOx-Speicherkatalysators auszuführen, und dabei in dem Diagnoseverfahren mindestens ein über einen Zeitraum integriertes Luft-Kraftstoff-Verhältnis-Signal stromaufwärts mit mindestens einem über denselben Zeitraum integrierten Luft-Kraftstoff-Verhältnis-Signal stromabwärts des NOx-Speicher-Katalysators zu vergleichen.

Weiterhin ist die Überwachungseinrichtung vorzugsweise auch ausgebildet, Signale über die Abgaszusammensetzung stromauf- und stromabwärts des NOx-Speicherkatalysators zu ermitteln.

Ein dritter Aspekt der Erfindung betrifft ein Fahrzeug, umfassend einen Verbrennungsmotor, einen NOx-Speicher-Katalysator und eine erfindungsgemäße Überwachungseinrichtung zur Verfügung gestellt.

Weitere Merkmale, Eigenschaften und Vorteile der Erfindung gehen aus der nachfolgend angeführten detaillierten Beschreibung eines Ausführungsbeispiels der Erfindung hervor. Das Ausführungsbeispiel wird anhand der Figuren nachfolgend näher erläutert. Es zeigen:

Figur 1     ein schematisch dargestelltes erfindungsgemäßes Fahrzeug; und

Figur 2     zeigt den zeitlichen Verlauf der NOx-Speicherfähigkeit

Figur 3     zeigt schematisch die Kombinierte CO- und HC-Schlupfrate und NOx-Speicherfähigkeit verschieden gealterter NOx-Speicher-Katalysatoren gemessen mit dem Verfahren mit geringer Schwefel-Empfindlichkeit

Figur 4     zeigt schematisch die NOx-Speicherfähigkeit verschieden gealterter NOx-Speicher-Katalysatoren gemessen mit dem Verfahren mit geringer Schwefel-Empfindlichkeit

Figur 5     zeigt schematisch den NOx-Schlupf verschieden gealterter NOx-Speicher-Katalysatoren gemessen mit dem Verfahren mit großer Schwefel-Empfindlichkeit

Figur 6     zeigt schematisch verschiedene Alterungsfaktoren, welche nach dem erfindungsgemäßen Verfahren ermittelt wurden

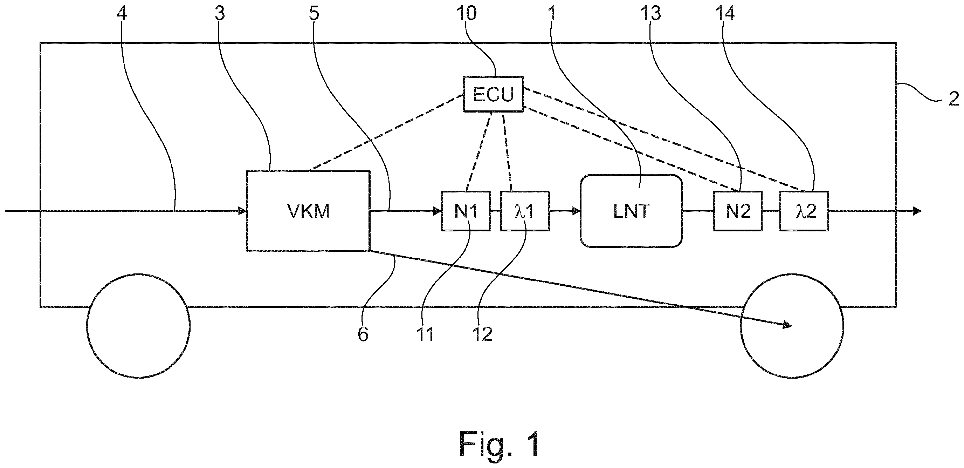

Figur 1 zeigt beispielhaft und stark schematisch dargestellt ein erfindungsgemäßes Fahrzeug 2, welches dazu ausgebildet ist, ein erfindungsgemäßes Verfahren auszuführen. Ein solches Fahrzeug 2 umfasst mindestens einen NOx-Speicher-Katalysator 1, einen Verbrennungsmotor 3 und eine erfindungsgemäße Steuerungseinrichtung 10.

Eine Frischluft 4 wird dem Verbrennungsmotor 3 zugeführt und mit Kraftstoff verbrannt. Dadurch wird eine mechanische Energie 6 erzeugt, die über einen nicht dargestellten Antriebsstrang an die Räder weitergeleitet wird. Aus der Verbrennung entsteht im Verbrennungsmotor 3 ein Abgas 5, welches durch den NOx-Speicher-Katalysator 1 geleitet wird.

Bei dem Verbrennungsmotor 3 kann es sich um einen handelsüblichen Diesel- oder Otto-Motor handeln. Dieser kann mit verschiedenen Verbrennungs- und Gemischaufbereitungsverfahren ausgebildet sein und mit verschiedenen Brennstoffen betrieben werden. Für die vorliegende Erfindung von besonderer Relevanz sind Verbrennungsmotoren 3, die zumindest zeitweise im Magerbetrieb (mit Luftüberschuss) und mit Kraftstoffen aus Kohlenwasserstoffverbindungen betrieben werden. Solche Verbrennungsmotoren 3 stoßen ein Abgas 5 aus, welches NOx enthält. Wenn solche Verbrennungsmotoren 3 mit einem Kraftsoff betrieben werden, der Schwefel enthält, enthält auch das ausgestoßene Abgas 5 Schwefel bzw. Schwefelverbindungen. Beispiele dafür sind handelsübliche PKW- und LKW-Dieselmotoren.

NOx-Speicher-Katalysatoren 1 werden beispielsweise in Verbindung mit handelsüblichen mager betriebenen Verbrennungsmotoren 3 in Fahrzeugen verbaut. Sie sind im Abgasstrang stromabwärts des Verbrennungsmotors 3 angeordnet und werden dementsprechend von dem Abgas 5, welches von dem Verbrennungsmotor 3 ausgestoßen wird, durchströmt. NOx-Speicher-Katalysatoren 1 können auch in andere Komponenten zur Abgasnachbehandlung, zum Beispiel Partikelfilter, integriert sein.

Das hier gezeigte Fahrzeug 2 umfasst außerdem einen NOx-Sensor 11 stromaufwärts des NOx-Speicherkatalysators 1 und einen NOx-Sensor 13 stromabwärts des NOx-Speicherkatalysators 1. Beide NOx-Sensoren 11 und 13 sind entsprechend im Abgas 5 angeordnet, um ein NOx-Signal im Abgas ermitteln zu können.

Das Fahrzeug 2 umfasst weiterhin eine Lambdasonde 12 stromaufwärts des NOx-Speicherkatalysators 1 und eine Lambdasonde 14 stromabwärts des NOx-Speicherkatalysators 1. Beide Lambdasonden 12 und 14 sind entsprechend im Abgas 5 angeordnet, um den Lambda-Signal im Abgas ermitteln zu können.

Alternativ können auch die $O_2$-Signale der NOx-Sensoren benutzt werden.

Bei dem Fahrzeug 2 kann es sich um einen PKW oder LKW handeln. Aber auch eine Ausbildung als Wasserfahrzeug (Boot oder Schiff) oder als Motorrad ist grundsätzlich denkbar.

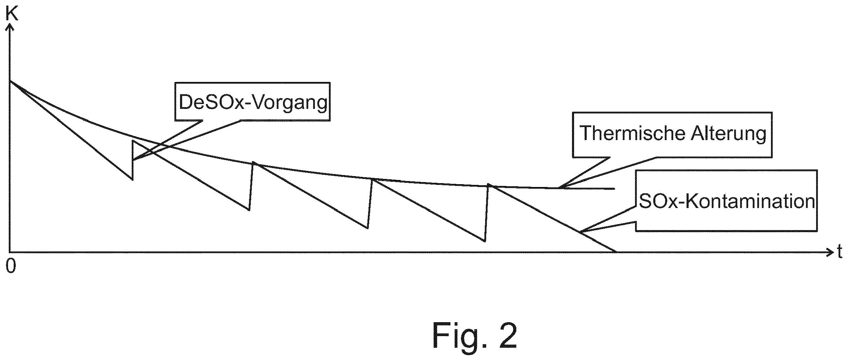

Figur 2 zeigt qualitativ eine NOx-Speicherfähigkeit K des NOx-Speicherkatalysators 1 über einer Zeit t. Die Zeit t beschreibt eine Zeit während des Betriebs des Verbrennungsmotors 3, in dem auch der NOx-Speicherkatalysator 1 von Abgas 5 durchströmt wird. Es ist zu erkennen, dass sich die NOx-Speicherfähigkeit K des NOx-Speicherkatalysators 1 mit zunehmender Zeit t beginnend von t=0 zunächst reduziert. Diese Reduktion resultiert zum einen aus der thermischen Alterung und zum anderen aus der Kontamination mit Schwefel. Wenn die Kontamination mit Schwefel im Rahmen eines DeSOx-Vorgangs beseitigt wird, erhöht sich die NOx-Speicherfähigkeit K des NOx-Speicherkatalysators 1 wieder. Allerdings erreicht die NOx-Speicherfähigkeit K des NOx-Speicherkatalysators 1 nach einem DeSOx-Vorgang nicht mehr den Ausgangswert vom Zeitpunkt t=0, bedingt durch thermische Alterung des NOx-Speicherkatalysators 1.

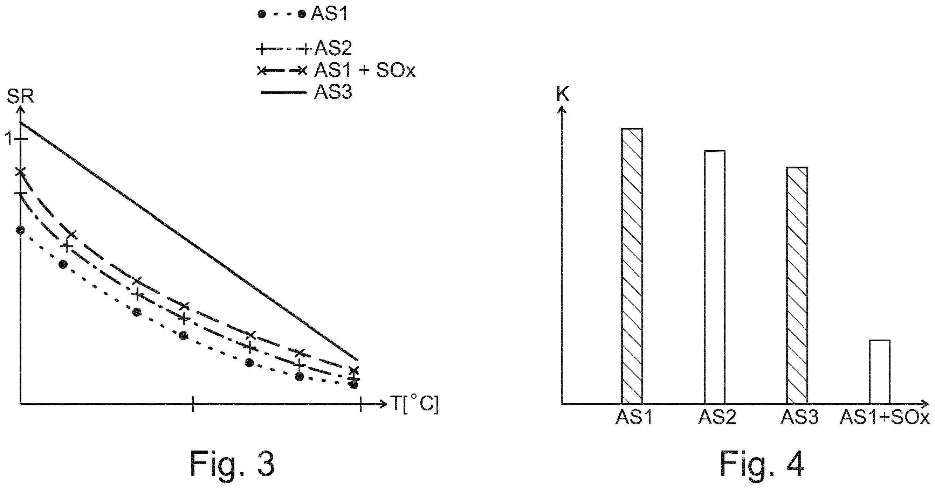

Figur 3 zeigt die Schlupfraten SR von verschieden gealterten NOx-Speicher-Katalysatoren nach einem Diagnoseverfahren mit geringer Schwefel-Empfindlichkeit, im folgenden "Verfahren 1" genannt. Figur 4 zeigt die tatsächliche NOx-Speicherfähigkeit K. Der in Figur 3 dargestellte Graph zeigt eine Schlupfrate SR ermittelt nach einem Verfahren wie in DE 10 2012 218 728 A1 und weiter oben beschrieben. Dieses Verfahren bewertet integrierte Lambdasignale stromauf- und stromabwärts des NOx-Speicherkatalysators 1 während eines fetten Regenerationsbetriebs. Die Lambdasignale können beispielsweise durch Lambdasonden 12 und 14 ermittelt werden.

Der Graph in Figur 4 zeigt die tatsächliche NOx-Speicherfähigkeit K derselben gealterten NOx-Speicherkatalysatoren 1. AS1 repräsentiert dabei als Alterungsstufe 1 einen neuwertigen NOx-Speicherkatalysator 1. AS2 und AS3 sind thermisch gealterte NOx-Speicherkatalysatoren 1, wobei AS3 über einen längeren Zeitraum thermisch gealtert ist als AS2. Es ist aus den Figuren 3 und 4 ersichtlich, dass thermische Alterung sowohl die tatsächliche NOx-Speicherfähigkeit reduziert als auch die nach Verfahren 1 ermittelte Schlupfrate erhöht.

Aufgrund der Definition von Verfahren 1 bedeutet ein höherer Zahlenwert der Schlupfrate SR einen weniger leistungsfähigen oder mehr gealterten NOx-Speicherkatalysator 1. Die Schlupfrate SR kann damit auch als anschaulicher Alterungsindex verwendet werden. Die Schlupfrate SR kann beispielsweise mit einem Schlupfratenschwellwert SR_max, der einen nach Verfahren 1 unzulässig gealterten NOx-Speicherkatalysator kennzeichnet, normiert werden. Damit kann ein Alterungsfaktor AF1 für Verfahren 1 definiert werden.

Mit AS1+SOx ist ein bezüglich der thermischen Alterung neuwertiger NOx-Speicherkatalysator 1 bezeichnet, der mit Schwefel kontaminiert wurde. Nach Verfahren 1 wird AS1+SOx an Hand seiner Schlupfrate SR als weniger gealtert bewertet als AS3. Die NOx-Speicherfähigkeit K von AS1+SOx ist allerdings deutlich geringer als die von AS3. Bei Verfahren 1 handelt es sich also um ein Diagnoseverfahren mit geringer Schwefel-Empfindlichkeit.

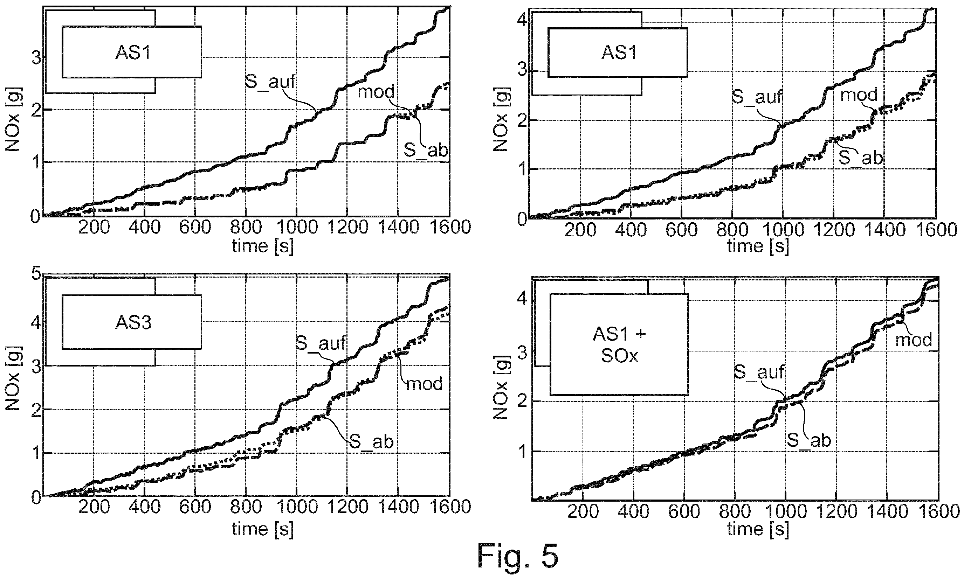

Figur 5 zeigt eine Anzahl von zeitlich integrierten NOx-Massenströmen stromaufwärts und stromabwärts von NOx-Speicherkatalysatoren 1 in verschiedenen Alterungszuständen. Der integrierte NOx-Massenstrom kann beispielsweise aus einem Massenstrom des Abgases 5 und Sensorsignalen von NOx-Sensoren 11 und 13 ermittelt werden. Den Massenstrom des Abgases 5 kann das Steuergerät 10 beispielsweise aus einem Massenstrom der Frischluft 4 und einer eingespritzten Kraftstoffmenge ermitteln.

Die Bezeichnungen der NOx-Speicherkatalysatoren 1 bezüglich ihrer Alterungszustände und Schwefelkontamination sind identisch zu denen in den Figuren 3 und 4. In den jeweiligen Einzelgraphen von Figur 5 bezeichnet s_auf den integrierten NOx-Massenstrom stromaufwärts des NOx-Speicherkatalysators 1. Die Kurve s_ab bezeichnet dementsprechend jeweils den integrierten NOx-Massenstrom stromabwärts des NOx-Speicherkatalysators 1. Die Kurve mod bezeichnet jeweils einen integrierten NOx-Massenstrom stromabwärts des NOx-Speicherkatalysators 1 aus einer Modellrechnung.

Ein Ansteigen von s_ab in Relation zu s_auf bedeutet, dass der Anteil des NOx, welches vom NOx-Speicherkatalysator 1 adsorbiert wurde, sinkt, der NOx-Speicherkatalysator also weniger wirksam ist. Ein Verfahren, im folgenden "Verfahren 2" genannt, zur Beurteilung des Alterungszustands von NOx-Speicherkatalysatoren beruht auf dem Vergleich des integrierten NOx-Massenstrom s_ab stromabwärts des NOx-Speicherkatalysators 1 mit einem Schwellwert s_ab_max. Wenn der Schwellwert s_ab_max überschritten wird, kann der NOx-Speicherkatalysator 1 als unzulässig gealtert eingestuft werden. Durch Normierung von s_ab, beispielsweise mit dem Schwellwert s_ab_max, kann für Verfahren 2 ein anschaulicher Alterungsindex AF2 erzeugt werden.

Es ist aus Figur 5 leicht ersichtlich, dass Verfahren 2 empfindlich auf Schwefelkontamination des NOx-Speicherkatalysators 1 reagiert. Der bezüglich seiner thermischen Alterung neuwertige NOx-Speicherkatalysator 1 mit Schwefelkontamination AS1-NOx zeigt einen deutlich größeren NOx-Massenstrom s_ab als der thermisch stark gealterte NOx-Speicherkatalysator 1 AS3 und wird damit als "mehr gealtert" bewertet.

Erfindungsgemäß können die Alterungsindizes von Verfahren 1 und Verfahren 2 gemeinsam ausgewertet werden, um eine Aussage über den Anteil der thermischen Alterung und der Alterung aus SOx-Kontamination an der gesamten momentanen Alterung des NOx-Speicherkatalysators 1 zu erhalten. Die Alterung des NOx-Speicherkatalysators 1 durch SOx-Kontamination kann auch als eine "scheinbare Alterung" AA bezeichnet werden. Dies beruht auf der Annahme, dass die Alterung basierend auf SOx-Kontamination keine "echte" Alterung ist, da sie durch einen DeSOx-Vorgang größtenteils reversibel ist.

Zunächst wird eine Anzahl von Sensibilitätsfaktoren festgelegt, welche die Empfindlichkeit von Verfahren 1 und Verfahren 2 auf Schwefelkontamination abbilden. In diesem Beispiel wird für Verfahren 1 der Sensibilitätsfaktor SS1 =1 und für Verfahren 2 der Sensibilitätsfaktor SS2 =0,2 gesetzt. Die scheinbare Alterung durch Schwefelkontamination AA ergibt sich dann zu

$$AA = (AF1 - AF2 ) / (SS2 - SS1) \qquad [Gl. 1]$$

Eine thermische Alterung A_t ergibt sich dann zu

$$A\_t = AF1 - SS1 * AA \qquad [Gl. 2]$$

bzw.

$$A\_t = AF2 - SS2 * AA \qquad [Gl. 3]$$

Es ist so möglich, den Alterungs-Zustand des NOx-Speicherkatalysators 1 bezüglich thermischer Alterung und NOx-Kontamination differenziert zu beurteilen und entsprechende Maßnahmen abzuleiten.

Beispielsweise kann durch Vergleich der scheinbaren Alterung AA mit einem Schwellwert bedarfsgerecht ein DeSOx-Vorgang eingeleitet werden. Auch kann durch den Vergleich der thermischen Alterung A_t mit einem Schwellwert eine unzulässige Alterung und damit notwendiger Austausch des NOx-Speicherkatalysators festgestellt werden.

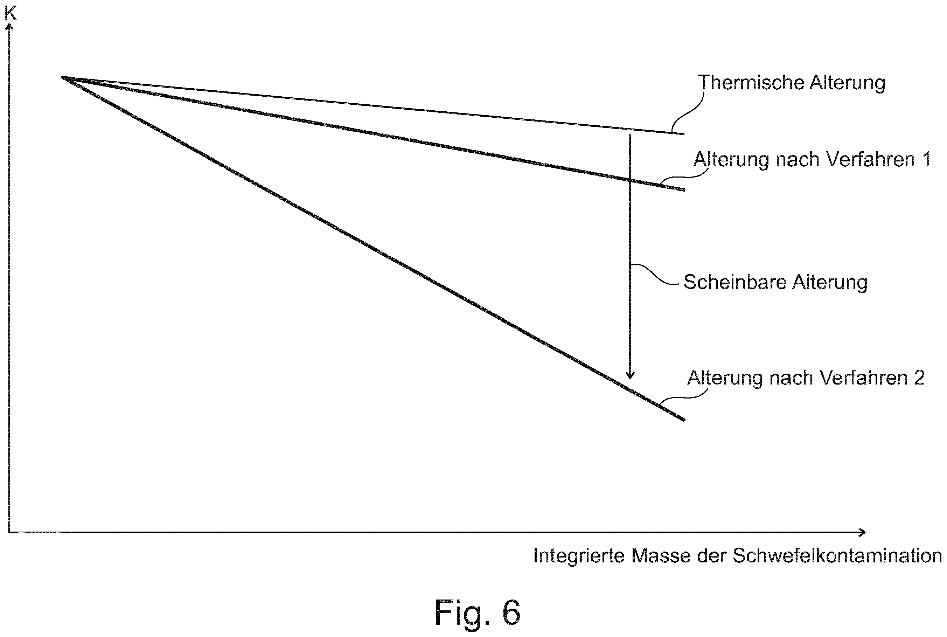

Figur 6 visualisiert qualitativ die Gleichungen 1 bis 3. Figur 6 stellt den Verlauf der NOx-Speicherkapazität K des NOx-Speicherkatalysators über der integrierten NOx-Kontamination und Betriebszeit dar. Es ist zum einen der Verlauf der NOx-Speicherkapazität K durch Alterung nach den Verfahren 1 und 2 dargestellt. Außerdem sind die nach dem erfindungsgemäßen Verfahren ermittelten Anteile der Alterung durch thermische Alterung A_t und scheinbare Alterung AA dargestellt.

**Bezugszeichenliste**

| | |
|---|---|
| 1 | NOx-Speicher-Katalysator |
| 2 | Fahrzeug |
| 3 | Verbrennungsmotor |
| 4 | Frischluft |
| 5 | Abgas |
| 6 | Energie |
| 10 | Steuerungseinrichtung |
| 11 | NOx-Sensor stromaufwärts NOx-Speicherkatalysator: N1 |
| 12 | Lambdasonde stromaufwärts NOx-Speicherkatalysator: $\lambda 1$ |
| 13 | NOx-Sensor stromabwärts NOx-Speicherkatalysator: N2 |
| 14 | Lambdasonde stromabwärts NOx-Speicherkatalysator: $\lambda 2$ |

| | |
|---|---|
| $\lambda$ | Luft-Kraftstoff-Verhältnis |
| AA | Scheinbare Alterung des NOx-Speicherkatalysators aus SOx-Kontamination |

| AF1 | Alterungsfaktor aus Verfahren 1 |
| AF2 | Alterungsfaktor aus Verfahren 2 |
| A_t | Thermische Alterung des NOx-Speicherkatalysators |
| K | NOx-Speicherfähigkeit |
| mod | integrierte NOx-Masse aus Modell stromabwärts |
| $SR_{CO}$ | Schlupfrate CO+HC nach schwefelunempfindlichen Verfahren |
| $SR_{CO\_max}$ | Schwellwert für SRco |
| S_ab | integrierter NOx-Massenstrom stromabwärts NOx-Speicherkatalysator |
| s_ab_max | Schwellwert für S_ab |
| S_auf | integrierter NOx-Massenstrom stromaufwärts NOx-Speicherkatalysator |
| T | Temperatur des NOx-Speicher-Katalysators |

**Patentansprüche**

1. Verfahren zur Ermittlung des Alterungszustands eines NOx-Speicher-Katalysators (1) eines Fahrzeuges (2) mit einem Verbrennungsmotor (3), bei dem ein durch thermische Alterung bedingter Anteil der Alterung des NOx-Speicher-Katalysators (1) und ein durch Schwefelbeladung bedingter Anteil der Alterung des NOx-Speicher-Katalysators (1) ermittelt werden und beide Anteile zur Ermittlung des Alterungszustands eines NOx-Speicher-Katalysators (1) herangezogen werden,
wobei zur Bestimmung der Anteile der Alterung des NOx-Speicher-Katalysators (1) mindestens zwei Diagnoseverfahren eingesetzt werden, von denen mindestens eines empfindlich und mindestens eines unempfindlich auf Schwefelbeladung des NOx-Speicher-Katalysators (1) reagiert,
wobei das unempfindlich auf Schwefelbeladung des NOx-Speicher-Katalysators (1) reagierende Diagnoseverfahren ein Verfahren ist, das mindestens ein Luft-Kraftstoff-Verhältnis-Signal stromaufwärts mit mindestens einem Luft-Kraftstoff-Verhältnis-Signal stromabwärts des NOx-Speicher-Katalysators (1) vergleicht,
dadurch charakterisiert, dass
das unempfindlich auf Schwefelbeladung des NOx-Speicher-Katalysators (1) reagierende Diagnoseverfahren ein Verfahren ist, welches mindestens ein über einen Zeitraum integriertes Luft-Kraftstoff-Verhältnis-Signal stromaufwärts mit mindestens einem über denselben Zeitraum integrierten Luft-Kraftstoff-Verhältnis-Signal stromabwärts des NOx-Speicher-Katalysators (1) vergleicht.

2. Verfahren nach Anspruch 1, bei dem das empfindlich auf Schwefelbeladung des NOx-Speicherkatalysators (1) reagierende Diagnoseverfahren ein Verfahren ist, welches den NOx-Schlupf durch den NOx-Speicherkatalysator (1) aus mindestens einem NOx-Signal stromaufwärts des NOx-Speicherkatalysator (1) und mindestens einem NOx-Signal stromabwärts des NOx-Speicherkatalysator (1) ermittelt.

3. Verfahren nach Anspruch 2, bei dem das empfindlich auf Schwefelbeladung des NOx-Speicherkatalysators (1) reagierende Diagnoseverfahren ein Verfahren ist, welches den NOx-Schlupf durch den NOx-Speicherkatalysator (1) aus mindestens einem zeitlich integrierten NOx-Signal stromaufwärts des NOx-Speicherkatalysator (1) und mindestens einem zeitlich integrierten NOx-Signal stromabwärts des NOx-Speicherkatalysator (1) ermittelt.

4. Verfahren nach einem der vorhergehenden Ansprüche, welches abhängig von dem durch Schwefelbeladung bedingten Anteil der Alterung des NOx-Speicher-Katalysators (1) einen Vorgang zum entschwefeln des NOx-Speicher-Katalysators (1) auslöst.

5. Verfahren nach einem der vorhergehenden Ansprüche, welches abhängig von dem durch thermische Alterung bedingten Anteil der Alterung des NOx-Speicher-Katalysators (1) den NOx-Speicher-Katalysator (1) als austauschnotwendig geschädigt bewertet.

6. Überwachungseinrichtung zur Überwachung des Alterungszustands eines NOx-Speicher-Katalysators (1) eines Fahrzeuges (2) mit einem Verbrennungsmotor (3) während des Betriebs des Fahrzeuges (2),
dadurch gekennzeichnet, dass
die Überwachungseinrichtung zur Durchführung eines empfindlich und eines unempfindlich auf Schwefelbeladung des NOx-Speicher-Katalysators (1) reagierenden Diagnoseverfahrens zur Ermittlung eines Alterungszustands des NOx-Speicher-Katalysators (1) unter Verwendung eines durch thermische Alterung bedingten Anteils der Alterung und eines durch Schwefelbeladung bedingten Anteils der Alterung nach einem der vorhergehenden Ansprüche ausgebildet ist, und dabei in dem Diagnoseverfahren mindestens ein über einen Zeitraum integriertes Luft-Kraftstoff-Verhältnis-Signal stromaufwärts mit mindestens einem über denselben Zeitraum integrierten Luft-Kraftstoff-Verhältnis-Signal stromabwärts des NOx-Speicher-Katalysators (1) zu vergleichen.

7. Überwachungseinrichtung nach Anspruch 6, die außerdem dazu ausgebildet ist, Signale über die Abgaszusammensetzung stromauf- und stromabwärts des NOx-Speicherkatalysators zu ermitteln.

8. Fahrzeug (2), umfassend einen Verbrennungsmotor (3), einen NOx-Speicher-Katalysator (1) und eine Überwachungseinrichtung nach Anspruch 6 oder 7.

**Claims**

1. Method of ascertaining the state of aging of an NOx storage catalyst (1) of a motor vehicle (2) having an internal combustion engine (3), in which a proportion of the aging of the NOx storage catalyst (1) caused by thermal aging and a proportion of the aging of the NOx storage catalyst (1) caused by sulfur loading are ascertained and the two proportions are used to ascertain the state of aging of an NOx storage catalyst (1), wherein the proportions of the aging of the NOx storage catalyst (1) are determined using at least two diagnosis methods, of which at least one is sensitive and at least one is insensitive to sulfur loading of the NOx storage catalyst (1), wherein the diagnosis method which is insensitive to sulfur loading of the NOx storage catalyst (1) is a method which compares at least one air/fuel ratio signal upstream with at least one air/fuel ratio signal downstream of the NOx storage catalyst (1), **characterized in that** the diagnosis method which is insensitive to sulfur loading of the NOx storage catalyst (1) is a method which compares at least one air/fuel ratio signal integrated over a period of time upstream with at least one air/fuel ratio signal integrated over the same period of time downstream of the NOx storage catalyst (1).

2. Method according to Claim 1, in which the diagnosis method which is sensitive to sulfur loading of the NOx storage catalyst (1) is a method which ascertains the NOx slip through the NOx storage catalyst (1) from at least one NOx signal upstream of the NOx storage catalyst (1) and at least one NOx signal downstream of the NOx storage catalyst (1).

3. Method according to Claim 2, in which the diagnosis method which is sensitive to sulfur loading of the NOx storage catalyst (1) is a method which ascertains the NOx slip through the NOx storage catalyst (1) from at least one NOx signal upstream of the NOx storage catalyst (1) integrated over time and at least one NOx signal downstream of the NOx storage catalyst (1) integrated over time.

4. Method according to any of the preceding claims, which triggers an operation for desulfurization of the NOx storage catalyst (1) according to the proportion of the aging of the NOx storage catalyst (1) caused by sulfur loading.

5. Method according to any of the preceding claims, which evaluates the NOx storage catalyst (1) as being damaged and in need of replacement according to the proportion of the aging of the NOx storage catalyst (1) caused by thermal aging.

6. Monitoring unit for monitoring the state of aging of an NOx storage catalyst (1) of a motor vehicle (2) having an internal combustion engine (3) during the operation of the motor vehicle (2),
**characterized in that**
the monitoring unit for performing a diagnosis method which is sensitive and a diagnosis method which is insensitive to sulfur loading of the NOx storage catalyst (1) of ascertaining a state of aging of the NOx storage catalyst (1) using a proportion of the aging caused by thermal aging and a proportion of the aging caused by sulfur loading is configured according to any of the preceding claims, and in this case, in the diagnosis method, to compare at least one air/fuel ratio signal integrated over a period of time upstream with at least one air/fuel ratio signal integrated over the same period of time downstream of the NOx storage catalyst (1).

7. Monitoring unit according to Claim 6, which is also designed to ascertain signals via the exhaust gas composition upstream and downstream of the NOx storage catalyst.

8. Motor vehicle (2), comprising an internal combustion engine (3), an NOx storage catalyst (1) and a monitoring unit according to Claim 6 or 7.

**EP 3 196 433 B1**

**Revendications**

1. Procédé permettant de déterminer l'état de vieillissement d'un catalyseur accumulateur de NOx (1) d'un véhicule (2) comprenant un moteur à combustion interne (3), procédé selon lequel une proportion du vieillissement du catalyseur accumulateur de NOx (1) provoquée par un vieillissement thermique et une proportion du vieillissement du catalyseur accumulateur de NOx (1) provoquée par une charge en soufre sont déterminées et les deux proportions sont prises en compte pour déterminer l'état de vieillissement d'un catalyseur accumulateur de NOx (1), au moins deux procédés de diagnostic étant utilisés pour déterminer les proportions du vieillissement du catalyseur accumulateur de NOx (1), parmi lesquels au moins l'un réagit de manière sensible à la charge en soufre du catalyseur accumulateur de NOx (1) et au moins l'un réagit de manière insensible à la charge en soufre de celui-ci, le procédé de diagnostic réagissant de manière insensible à la charge en soufre du catalyseur accumulateur de NOx (1) étant un procédé qui compare au moins un signal de rapport air/combustible en amont du catalyseur accumulateur de NOx avec au moins un signal de rapport air/combustible en aval du catalyseur accumulateur de NOx (1),
**caractérisé en ce que**
le procédé de diagnostic réagissant de manière insensible à la charge en soufre du catalyseur accumulateur de NOx (1) est un procédé qui compare au moins un signal de rapport air/combustible intégré sur un intervalle de temps en amont du catalyseur accumulateur de NOx avec au moins un signal de rapport air/combustible intégré sur le même intervalle de temps en aval du catalyseur accumulateur de Nox (1).

2. Procédé selon la revendication 1, selon lequel le procédé de diagnostic réagissant de manière sensible à la charge en soufre du catalyseur accumulateur de NOx (1) est un procédé qui détermine le dégagement de NOx à travers le catalyseur accumulateur de NOx (1) à partir d'au moins un signal de NOx en amont du catalyseur accumulateur de NOx (1) et d'au moins un signal de NOx en aval du catalyseur accumulateur de NOx (1).

3. Procédé selon la revendication 2, selon lequel le procédé de diagnostic réagissant de manière sensible à la charge en soufre du catalyseur accumulateur de NOx (1) est un procédé qui détermine le dégagement de NOx à travers le catalyseur accumulateur de NOx (1) à partir d'au moins un signal de NOx intégré dans le temps en amont du catalyseur accumulateur de NOx (1) et d'au moins un signal de NOx intégré dans le temps en aval du catalyseur accumulateur de NOx (1).

4. Procédé selon l'une quelconque des revendications précédentes, lequel déclenche une opération de désulfuration du catalyseur accumulateur de NOx (1) en fonction de la proportion du vieillissement du catalyseur accumulateur de NOx (1) provoquée par une charge en soufre.

5. Procédé selon l'une quelconque des revendications précédentes, lequel évalue le catalyseur accumulateur de NOx (1) comme étant endommagé au point de nécessiter un remplacement en fonction de la proportion du vieillissement du catalyseur accumulateur de NOx (1) provoquée par un vieillissement thermique.

6. Dispositif de surveillance permettant de surveiller l'état de vieillissement d'un catalyseur accumulateur de NOx (1) d'un véhicule (2) comprenant un moteur à combustion interne (3) pendant le fonctionnement du véhicule (2),
**caractérisé en ce que**
le dispositif de surveillance est conçu pour mettre en oeuvre un procédé de diagnostic réagissant de manière sensible à la charge en soufre du catalyseur accumulateur de NOx (1) et un procédé de diagnostic réagissant de manière insensible à la charge en soufre du catalyseur accumulateur de NOx pour déterminer un état de vieillissement du catalyseur accumulateur de NOx (1) par utilisation d'une proportion du vieillissement provoquée par un vieillissement thermique et d'une proportion du vieillissement provoquée par une charge en soufre selon l'une quelconque des revendications précédentes, et pour comparer, dans le procédé de diagnostic, au moins un signal de rapport air/combustible intégré sur un intervalle de temps en amont du catalyseur accumulateur de NOx (1) avec au moins un signal de rapport air/combustible intégré sur le même intervalle de temps en aval du catalyseur accumulateur de NOx.

7. Dispositif de surveillance selon la revendication 6, lequel est en outre conçu pour déterminer des signaux relatifs à la composition de gaz d'échappement en amont et en aval du catalyseur accumulateur de NOx.

8. Véhicule (2), comportant un moteur à combustion interne (3), un catalyseur accumulateur de NOx (1) et un dispositif de surveillance selon la revendication 6 ou 7.

9

Fig. 1

EP 3 196 433 B1

Fig. 2

Fig. 3

Fig. 4

Fig. 5

EP 3 196 433 B1

Fig. 6

**EP 3 196 433 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012218728 A1

- DE 10302700 B4